# EUROPEAN PATENT SPECIFICATION

(11) **EP 2 633 302 B1**
(45) Date of publication and mention of the grant of the patent: **10.09.2014**
(21) Application number: 11728205.3
(22) Date of filing: 08.06.2011
(51) Int. Cl.: G01N 29/07, G01N 29/11

(54) **METHOD FOR DETERMINING THE FIBRE ORIENTATION IN A ROTOR BLADE OF A WIND TURBINE HAVING A NUMBER OF FIBRES DISTRIBUTED IN A LAMINATE MATERIAL**
VERFAHREN ZUR BESTIMMUNG DER FASERORIENTIERUNG BEI EINEM ROTORBLATT EINER WINDTURBINE MIT EINER ANZAHL VON VERTEILTEN FASERN IN EINEM LAMINATMATERIAL
PROCÉDÉ POUR DÉTERMINER L'ORIENTATION DE FIBRES DANS UN PALE DE TURBINE D'UNE ÉOLIENNE AYANT UN CERTAIN NOMBRE DE FIBRES RÉPARTIES DANS UN MATÉRIAU STRATIFIÉ

(30) Priority: 11.01.2011 EP 11150622
(43) Date of publication of application: 04.09.2013
(73) Proprietor: Siemens Aktiengesellschaft, 80333 München (DE)
(72) Inventor: NIELSEN, Per, DK-9310 Vodskov (DK)
(86) International application number: PCT/EP2011/059446
(87) International publication number: WO 2012/095189

(56) References cited:
- EP-A2- 1 471 350
- US-A- 5 408 882
- HAUL-TE CHIEN ET AL: "An alternative approach of acousto-ultrasonic technique for monitoring material anisotropy of fiber-reinforced composites", IEEE TRANSACTIONS ON ULTRASONICS, FERROELECTRICS AND FREQUENCY CONTROL, vol. 41, no. 2, 1 March 1994 (1994-03-01), pages 209-214, XP55005817, ISSN: 0885-3010, DOI: 10.1109/58.279133
- DATABASE WPI Week 198207 Thomson Scientific, London, GB; AN 1982-B7908E XP000002657848, & SU 830 232 B (BURMINOV V V) 15 May 1981 (1981-05-15)
- MARKHAM ET AL: "Measurement of the elastic constants of fibre composites by ultrasonics", COMPOSITES, IPC BUSINESS PRESS LTD. HAYWARDS HEATH, GB, vol. 1, no. 2, 1 December 1969 (1969-12-01), pages 145-149, XP024212677, ISSN: 0010-4361, DOI: 10.1016/0010-4361(69)90059-7 [retrieved on 1969-12-01]

## Description

Method for determining the fibre orientation in a rotor blade of a wind turbine having a number of fibres distributed in a laminate material, whereby the fibres are orientated in at least one defined direction

Fibre-reinforced components or composite components respectively comprise a number of fibres distributed in a laminate or matrix material in order to enhance the mechanical performance of the respective components. By concertedly orientating the fibres in defined directions, the mechanical properties of the respective components may be individually improved, particularly regarding the tensile strength of the respective component.

An example for a respective fibre-reinforced component is a rotor blade of a wind turbine. Rotor blades are usually built of respective fibres, i.e. mainly glass and/or carbon fibres, arranged in a resin-like laminate. The fibres are usually orientated in or along the longitudinal axis of the rotor blade. In such a manner, the rotor blade is ready to withstand centrifugal forces as well as gravitational forces applied during its operation.

Yet, cracking of the respective fibres may be possible in highly stressed portions of the component mainly due to huge bending moments as a consequence of the dynamic mechanical load the component is exposed to.

Generally, repair of respective damage components is possible essentially including the steps of gridning, removing of paint at the damaged area, and inserting of new and if need be additional fibres. Thereby, it is of material importance that the newly inserted fibres are orientated in the same manner as the original fibres.

However, the exact orientation of the fibres of the component is difficult to observe since the fibres are extremely thin and not visible from the outside.

Approaches for determining the fibre orientation in a fibre-reinforced component having a number of fibres distributed in a laminate material are rarely known and in particularly not executable without damaging the respective component.

Hence, it is the object to provide an improved method for determining the fibre orientation in a rotor blade of a wind turbine having a number of fibres distributed in a laminate material, whereby the fibres are orientated in at least one defined direction.

This is inventively achieved by a method as has been initially described, comprising the steps of:
a) emitting an ultrasonic signal into the component by means of an ultrasonic transducer,
b) receiving a reflected ultrasonic signal by means of an ultrasonic receiver and generating a measurement signal, whereby the ultrasonic transducer and the ultrasonic receiver are disposed in a defined linear relationship,
c) determining an information indicating a degree of the fibre orientation in relation to the defined linear relationship of the ultrasonic transducer and the ultrasonic receiver from the respective measurement signal.

The inventive method uses ultrasonic signals (ultrasonic waves) in order to determine the orientation of respective fibres in a laminate material. Hence, the inventive principle allows a non-destructive method for determining the orientation of respective fibres.

Thereby, in the first step a) an ultrasonic signal is emitted into the component by means of an ultrasonic transducer. Thereby, it is preferred to use low frequency ultrasonic, i.e. the ultrasonic signal has a frequency in the range of ca. 100 kHz in favour. The ultrasonic signal is reflected at respective structures within the component such as mainly the fibres.

The reflected ultrasonic signal is received by means of an ultrasonic receiver in step b) and a measurement signal containing diverse information regarding the received ultrasonic signal such as the frequency, amplitude, time of flight, etc. is generated.

Thereby, it is of importance that the ultrasonic transducer and the ultrasonic receiver are disposed in a defined linear geometrical relationship. I.e. the ultrasonic transducer and the ultrasonic receiver are disposed at the opposite endings of a respective straight line having a given distance.

In the following step c) the measurement signal is used to determine an information indicating a degree of the fibre orientation in relation to the defined linear relationship of the ultrasonic transducer and the ultrasonic receiver from the respective measurement signal. Hence, the respective information indicates the relative position of the linearly aligned ultrasonic transducer and ultrasonic receiver in comparison to the respective arrangement of the respective fibres within the component. Referring to a fibre-reinforced rotor blade of a wind turbine, the fibres are usually uni-directionally orientated in the longitudinal axis of the rotor blade.

In such a manner, the information differs in dependence of the relative position and/or orientation of the ultrasonic transducer and/or ultrasonic receiver and the respective fibres within the component. Thereby, aligning the ultrasonic transducer and the ultrasonic receiver in the direction of the fibres or fibre strings, i.e. particularly on top of a respective fibre or fibre string, leads to a different information than aligning the ultrasonic transducer and the ultrasonic receiver in a certain angle with respect to the respective fibres or fibre strings.

Hence, the respective differences in the information are correlated to the position and/or orientation of the ultrasonic transducer and the ultrasonic receiver, i.e. the respective straight line connecting the ultrasonic transducer and the ultrasonic receiver, relative to the position of the fibres within the component.

The information may also be in the shape of a respective signal or the like. Hence, a comparatively strong information signal strength indicates a corresponding alignment of the ultrasonic transducer and the ultrasonic receiver and the fibres, i.e. the position and/or orientation of the ultrasonic transducer and the ultrasonic receiver essentially matches the position and/or orientation of the fibres. In contrast, a comparatively weak information signal strength indicates a certain inclined position and/or orientation of the ultrasonic transducer and the ultrasonic receiver relative to the position and/or orientation of the fibres.

Thereby, it is possible that the aforementioned steps a) and b) are to be repeated at least one time while moving the ultrasonic transducer and/or the ultrasonic receiver along the fibre-reinforced component. Hence, by moving the ultrasonic transducer and/or the ultrasonic receiver to different positions on the surface of the respective component, the respective information will vary since different positions and/or orientations of the respective ultrasonic transducer and/or the ultrasonic receiver on the surface of the component also means different positions and/or orientations of the respective ultrasonic transducer and/or ultrasonic receiver in relation to the fibres leading to respective different information signal strengths.

Hence, consistent or gradual changes of the position and/or orientation of the respective ultrasonic transducer and/or ultrasonic receiver will lead to respective changes of the measurement signal in dependence of the degree of the positional and/or orientational matching of the position and/or orientation of the different positions of the respective ultrasonic transducer and/or the ultrasonic receiver relative to the position and/or orientation of the respective fibres within the component. By manually or automatically comparing the respective obtained information in dependence of the given position and/or orientation of the respective ultrasonic transducer and/or ultrasonic receiver an estimation of the relative position and/or orientation of the respective fibres is possible.

Thereby, the respective information may de determined from separate respective measurement signals or all respective measurement signals. Hence, the respective information may be determined continuously or gradually such as by actuating a respective control element for recording a respective measurement signal at diverse positions and/or times for instance. This procedure may be executed individually or automatically.

Generally, it is also possible to derive an information indicating the degree of the position and/or orientation of the fibres relative to the ultrasonic transducer and ultrasonic receiver from only one single information.

It is preferred that the information is determined from the amplitude and/or the time of flight of the received ultrasonic signal. This embodiment is based on the principle that the amplitude and/or time of flight of the ultrasonic signals received by the ultrasonic receiver differs in dependence of the position and/or orientation of the ultrasonic transducer and/or ultrasonic receiver relative to the fibres. Thus, changing the position and/or orientation of the ultrasonic transducer and/or ultrasonic receiver leads to changes of the amplitude and/or time of flight of the respective received ultrasonic signal(s).

Thereby, a respective maximum amplitude and minimum time of flight indicates that the ultrasonic transducer and the ultrasonic receiver are essentially aligned as the respective fibres, i.e. the straight line extending between the ultrasonic transducer and the ultrasonic receiver matches the position and/or orientation of the respective fibres within the component. Thus, the ultrasonic transducer and the ultrasonic receiver are located in the same direction as the fibres in this case.

The information may be output as an audio and/or visual information for instance. Hence, the information may be in the shape of a text or graphical information indicating the degree of the relative position between the ultrasonic transducer and the ultrasonic receiver on the one hand and the respective fibres within the component on the other hand. It is also possible that the information is output as a signal tone or a signal light, whereby both the volume of the signal tone and the intensity of the signal light varies in dependence of the degree of matching between the position and/or orientation of the ultrasonic transducer and the ultrasonic receiver in comparison to the position and/or orientation of the respective fibres. This allows an easy and fast way to estimate the position and/or orientation of the respective fibres within the component.

It is possible that an ultrasonic conducting gel is applied to the surface of the respective component at least in a region of the ultrasonic transducer and the ultrasonic receiver. Respective gels may be applied between the ultrasonic transducer and/or the ultrasonic receiver and the surface of the respective component in order to improve the respective emission and/or reception of respective ultrasonic signals.

Aside, the invention refers to an apparatus for determining the fibre orientation in a fibre-reinforced component having a number of fibres distributed in a laminate material, whereby the fibres are orientated in at least one defined direction. The apparatus comprises at least one ultrasonic transducer adapted to emit an ultrasonic signal and at least one ultrasonic receiver adapted to receive an ultrasonic signal, with the ultrasonic transducer and the ultrasonic receiver being disposed in a defined linear relationship. The apparatus further comprises a control unit. The control unit is adapted to generate at least one measurement signal from the received ultrasonic signal and to determine an information indicating a degree of the fibre orientation in relation to the linear geometrical relationship of the ultrasonic transducer and the ultrasonic receiver from the at least one measurement signal. The apparatus is adapted to perform the method as has been described before.

Hence, a qualitative and non-destructive estimation of the position and/or orientation of respective fibres within a respective fibre-reinforced component such as a rotor blade of a wind turbine is possible.

The inventive apparatus may easily be used on-site, i.e. particularly on installed rotor blades. Further tools e.g. for grinding the surface of the respective component are not required.

Thereby, the apparatus or a respective control unit of the apparatus is adapted to determine the information from the amplitude and/or the time of flight of the received ultrasonic signal(s). As has been set forth, the amplitude and/or time of flight of the respective received ultrasonic signals serve as relevant parameters for determining the relative position and/or orientation of the ultrasonic transducer and the ultrasonic receiver relative to the respective fibres within the component. Of course, the apparatus is provided with respective calculating means for determining the amplitude and/or time of flight from the received ultrasonic signal.

Since a defined linear connection between the ultrasonic transducer and the ultrasonic receiver is necessary for executing the inventive method, the ultrasonic transducer and the ultrasonic receiver are connected by a linear connecting member. The linear connecting member may have the shape of a rod, cable or the like having a given length. Hence, the connecting member is adapted to keep the ultrasonic transducer and the ultrasonic receiver in a defined distance.

Thereby, the length of the connecting member may be adjustable or fixed. In both cases, the length of the connecting member shall be constant during the measurement. The length of the connecting member may be adjusted in continuous or graduate manner. Adjustment of the length of the connecting member may be realised by designing the connecting member in the shape of telescope for instance.

The ultrasonic transducer and/or the ultrasonic receiver may be detachably connected to the connecting member. This inventive embodiment is of advantage regarding handling and transport of the inventive apparatus.

In a further embodiment, the control unit comprises at least one user interface adapted to output the respective information as audio and/or visual information. Thereby, the volume or intensity of the output information may vary in dependence of the degree of matching between the position and/or orientation of the ultrasonic transducer and the ultrasonic receiver and the respective fibres. I.e. a loud or highly intense output of the respective information indicates that the alignment of the ultrasonic transducer and the ultrasonic receiver corresponds to the alignment of the respective fibres within the component.

In favour, the ultrasonic transducer is adapted to emit ultrasonic signals having a frequency of ca. 100 kHz. The use of low frequency ultrasonic signals is especially efficient for executing the inventive method. However, the ultrasonic transducer may generally emit ultrasonic signals of other frequencies as well.

In the following, the invention is described in detail as reference is made to the figures, whereby:
- Fig. 1: shows a principle view of the inventive apparatus according to an exemplary embodiment of the invention;
- Fig. 2: shows a principle view of the inventive apparatus during a measurement in a longitudinal view;
- Fig. 3: shows a principle top view of the inventive apparatus in a first orientation relative to the longitudinal axis of the component; and
- Fig. 4: shows a principle top view of the inventive apparatus in a second orientation relative to the longitudinal axis of the component.

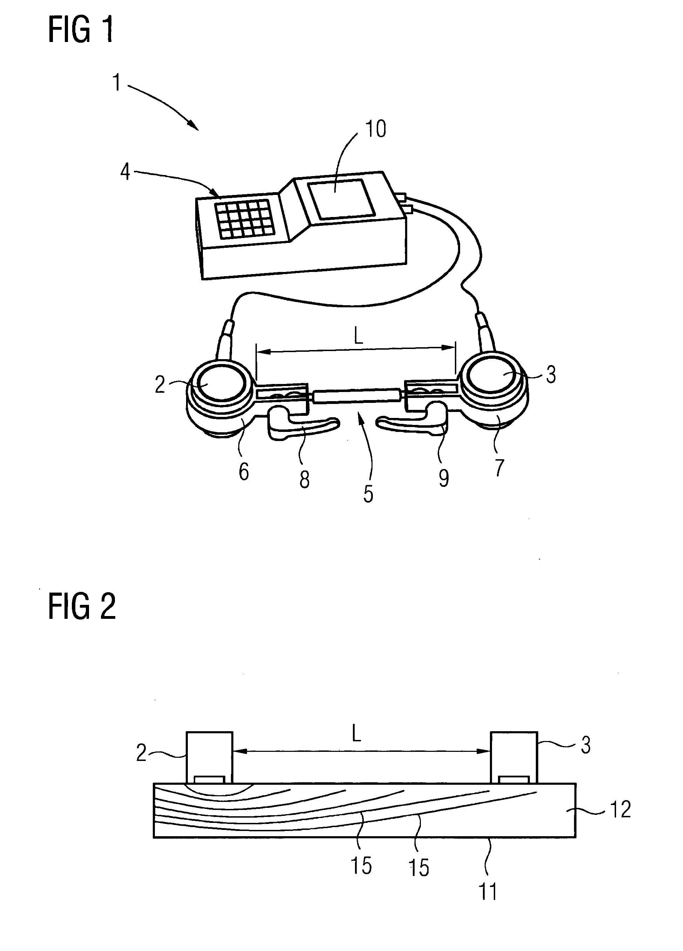

Fig. 1 shows a principle view of the inventive apparatus 1 according to an exemplary embodiment of the invention. The apparatus 1 essentially comprises three components, i.e. an ultrasonic transducer 2, an ultrasonic receiver 3 and a control unit 4 communicating with both ultrasonic transducer 2 and the ultrasonic receiver 3 by means of cables or radio communication. The ultrasonic transducer 2 and the ultrasonic receiver 3 are disposed in a defined linear geometrical relationship by means of a connecting member 5 having the shape of a rod or a cable both of defined length 1. The ends of the connecting members 5 are provided with respective supports 6, 7 supporting the ultrasonic transducer 2 and the ultrasonic receiver 3 respectively. By actuating the respective levers 8, 9 it is possible to detach the ultrasonic transducer 2 and the ultrasonic receiver 3 from the connecting member 5.

The ultrasonic transducer 2 is adapted to emit an ultrasonic signal 15 (ultrasonic wave), the ultrasonic receiver 3 is adapted to receive respective ultrasonic signals 15. The control unit 4 is adapted to generate at least one measurement signal from the received ultrasonic signal 15 and to determine an information indicating a degree of the fibre orientation in relation to the linear geometrical relationship of the ultrasonic transducer 2 and the ultrasonic receiver 3 from the at least one measurement signal.

Further, the control unit 4 comprises a display 10 in order to output the respective information.

As is discernible, the inventive apparatus 1 is relatively small in size and consequently easy to carry even when working on respective fibre-reinforced components 11 such as rotor blades or the like.

The inventive method for determining the fibre orientation in a fibre-reinforced component 11 will be explained with reference to the figures 2 - 4.

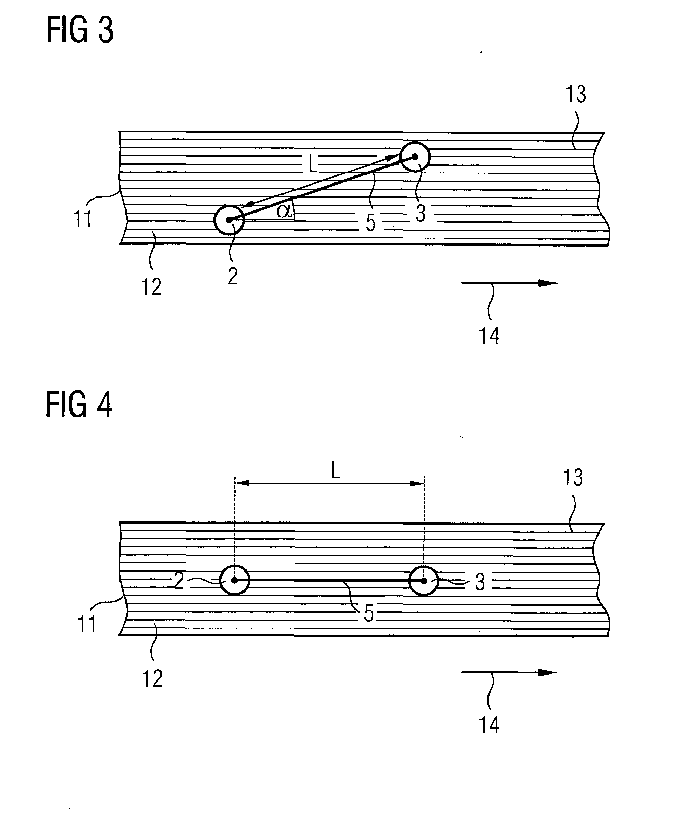

Thereby, the fibre-reinforced component 11 is built of a laminate material 12 such as a resin including a number of fibres 13 such as glass and/or carbon fibres for instance. The fibres 13 are orientated in one defined direction, i.e. the fibres 13 are uni-directionally orientated (cf. arrow 14 in fig. 3, 4).

As is discernible from fig. 2, both the ultrasonic transducer 2 and the ultrasonic receiver 3 are disposed on the surface of the component 11. It is possible to apply a respective ultrasonic gel on the surface of the component 11 in order to improve the signal quality of the respective ultrasonic signals 15. The ultrasonic transducer 2 emits ultrasonic signals 15, i.e. ultrasonic waves of a given frequency of about 100 kHz into the component 11. The ultrasonic receiver 3 receives the reflected ultrasonic signals 15. Both emission and reception of the ultrasonic signals 15 is controlled by the control unit 4.

The control unit 4 generates a measurement signal from the received ultrasonic signal 15. The measurement signal particularly includes the amplitude and/or the time of flight of the respective ultrasonic signal 15.

The inventive method allows a qualitatively and non-destructive determination of the position and/or orientation of the respective fibres 13 within the component 11, though they are not visible from the outside.

This is achieved by the determination of an information indicating a degree of the position and/or orientation of the fibres 13 in relation to the defined linear relationship of the ultrasonic transducer 2 and the ultrasonic receiver 3 essentially defined by the connecting member 5 from the respective measurement signal (cf. fig. 3, 4).

According to fig. 3, the connecting member 5 connecting the ultrasonic transducer 2 and the ultrasonic receiver 3 is disposed with a slight angle α relative to the orientation of the fibres 13 as indicated by arrow 14. Hence, the position and/or orientation of the connecting member 5 does not match the position and/or orientation of the fibres 13 as the connecting member 5 has an inclined position and/or orientation in relation to the fibres 13.

In this case, the measurement signal is damped since the alignment of the connecting members 5, i.e. the ultrasonic transducer 2 and the ultrasonic receiver 3 does not match the orientation of the fibres 13. Hence, a first inventive information considering the amplitude and/or the time of flight of the received ultrasonic signal 15 is output by the control unit 4. Both the amplitude and the time of flight allow a qualitative correlation between the matching of the position and/or orientation of the ultrasonic transducer 2 and the ultrasonic receiver 3 in relation to the position and/or orientation of the fibres 13 within the component 11.

By changing the position and/or orientation of either both the ultrasonic transducer 2 and the ultrasonic receiver 3 or merely the ultrasonic transducer 2 or the ultrasonic receiver 3 as shown in fig. 4, the respective information will also change. The position and/or orientation of the ultrasonic transducer 2 and the ultrasonic receiver 3 essentially matches the position and/or orientation of the respective fibres 13 in fig. 4. This is reflected in the amplitude and the time of flight of the received ultrasonic signal 15 and further in the respective information generated from the measurement signal since a respective alignment of the ultrasonic transducer 2 and the ultrasonic receiver 3 relative to the fibres 13 will essentially increase the amplitude and decrease the time of flight of the respective ultrasonic signal 15. Consequently, the information generated in fig. 4 also differs from the respective information generated in fig. 3. This may be perceivable by a respective text or graphical output on the display 10 of the control unit 4. Aside, it is thinkable that an audible information is output with higher volume or visual information is output with higher intensity in dependence of the degree of matched alignment of the ultrasonic transducer 2 and the ultrasonic receiver 3 relative to the respective fibres 13.

All in all, the present invention is advantageous in that it solves the problem of determining the position and/or orientation of the fibres 13 in respective rotor blades of wind turbines 11. The inventive method is non-destructive and offers an easy and fast way to estimate the position and/or orientation of respective fibres 13 even when the fibres 13 are not visible from the outside due to coatings, surface paint, etc.

## Claims

1. Method for determining the fibre orientation in a rotor blade of a wind turbine having a number of fibres distributed in a laminate material, whereby the fibres are orientated in at least one defined direction, the method comprising the steps of:
a) emitting an ultrasonic signal into the component by means of an ultrasonic transducer,
b) receiving a reflected ultrasonic signal by means of an ultrasonic receiver and generating a measurement signal, whereby the ultrasonic transducer and the ultrasonic receiver are disposed in a defined linear relationship,
c) determining an information indicating a degree of the fibre orientation in relation to the defined linear relationship of the ultrasonic transducer and the ultrasonic receiver from the respective measurement signal.

2. Method according to claim 1, wherein steps a) and b) are repeated at least one time, while moving the ultrasonic transducer and/or the ultrasonic receiver along the fibre-reinforced component, whereby the respective information is determined from separate respective measurement signals or all respective measurement signals.

3. Method according to claim 1 or 2, wherein the information is determined from the amplitude and/or the time of flight of the received ultrasonic signal.

4. Method according to one of the preceding claims, wherein the emitted ultrasonic signal has a frequency of 100 kHz.

5. Method according to one of the preceding claims, wherein the information is released as an audio and/or or visual information.

6. Method according to one of the preceding claims, wherein an ultrasonic conducting gel is applied to the surface of the respective component at least in the region of the ultrasonic transducer and the ultrasonic receiver.

7. Apparatus (1) for determining the fibre orientation in a rotor blade of a wind turbine having a number of fibres (13) distributed in a laminate material (12), whereby the fibres (13) are orientated in at least one defined direction, the apparatus (1) comprising at least one ultrasonic transducer (2) adapted to emit an ultrasonic signal (15) and at least one ultrasonic receiver (3) adapted to receive an ultrasonic signal (15), with the ultrasonic transducer (2) and the ultrasonic receiver (3) being disposed in a defined linear relationship, and a control unit (4) adapted to generate at least one measurement signal from the received ultrasonic signal (15) and to determine an information indicating a degree of the fibre orientation in relation to the linear geometrical relationship of the ultrasonic transducer (2) and the ultrasonic receiver (3) from the at least one measurement signal, with the apparatus (1) being adapted to perform the method according to one of the preceding claims, whereby the ultrasonic transducer (2) and the ultrasonic receiver (3) are connected by a linear connecting member (5), **characterised in that** the length of the connecting member (5) is adjustable.

8. Apparatus according to claim 7, wherein the control unit (4) is adapted to determine the information from the amplitude and/or the time of flight of the received ultrasonic signal (15).

9. Apparatus according to claim 7 or 8, wherein the ultrasonic transducer (2) and/or the ultrasonic receiver (3) are detachably connected to the connecting member (5).

10. Apparatus according to one of the claims 7 to 9, wherein the control unit (4) comprises at least one user interface adapted to output the respective information as audio and/or visual information.

11. Apparatus according to one of the claims 7 to 10, wherein the ultrasonic transducer (2) is adapted to emit ultrasonic signals having a frequency of 100 kHz.

## Patentansprüche

1. Verfahren zum Bestimmen der Faserausrichtung in einem Rotorblatt einer Windenergieanlage, bei dem in einem Laminatmaterial eine Anzahl Fasern verteilt sind, wobei die Fasern in mindestens einer festgelegten Richtung ausgerichtet sind, mit folgenden Schritten:
a) Aussenden eines Ultraschallsignals in die Komponente mit Hilfe eines Ultraschallwandlers,
b) Empfangen eines reflektierten Ultraschallsignals mit Hilfe eines Ultraschallempfängers und Erzeugen eines Messsignals, wobei der Ultraschallwandler und der Ultraschallempfänger in einer festgelegten linearen Beziehung angeordnet sind,
c) Bestimmen einer Information, die einen Grad der Faserausrichtung in Bezug auf die festgelegte lineare Beziehung des Ultraschallwandlers und des Ultraschallempfängers angibt, aus dem entsprechenden Messsignal.

2. Verfahren nach Anspruch 1, bei dem die Schritte a) und b) mindestens einmal wiederholt werden, während der Ultraschallwandler und/ oder der Ultraschallempfänger an der faserverstärkten Komponente entlang verschoben werden, wobei die entsprechende Information aus separaten entsprechenden Messsignalen oder allen entsprechenden Messsignalen bestimmt wird.

3. Verfahren nach Anspruch 1 oder 2, bei dem die Information aus der Amplitude und/ oder der Laufzeit des empfangenen Ultraschallsignals bestimmt wird.

4. Verfahren nach einem der vorhergehenden Ansprüche, bei dem das ausgesendete Ultraschallsignal eine Frequenz von 100 kHz besitzt.

5. Verfahren nach einem der vorhergehenden Ansprüche, bei dem die Information als Audio- und/ oder visuelle Information ausgegeben wird.

6. Verfahren nach einem der vorhergehenden Ansprüche, bei dem zumindest in dem Bereich des Ultraschallwandlers und des Ultraschallempfängers ein Ultraschallgel auf die Oberfläche der entsprechenden Komponente aufgetragen wird.

7. Vorrichtung (1) zum Bestimmen der Faserausrichtung in einem Rotorblatt einer Windenergieanlage, bei dem in einem Laminatmaterial (12) eine Anzahl Fasern (13) verteilt sind, wobei die Fasern (13) in mindestens einer festgelegten Richtung ausgerichtet sind, wobei die Vorrichtung (1) Folgendes umfasst: mindestens einen Ultraschallwandler (2), der so ausgelegt ist, dass er ein Ultraschallsignal (15) aussendet, und mindestens einen Ultraschallempfänger (3), der so ausgelegt ist, dass er ein Ultraschallsignal (15) empfängt, wobei der Ultraschallwandler (2) und der Ultraschallempfänger (3) in einer festgelegten linearen Beziehung angeordnet sind, und eine Steuereinheit (4), die so ausgelegt ist, dass sie aus dem empfangenen Ultraschallsignal (15) mindestens ein Messsignal erzeugt und aus dem mindestens einen Messsignal eine Information bestimmt, die einen Grad der Faserausrichtung in Bezug auf die lineare geometrische Beziehung des Ultraschallwandlers (2) und des Ultraschallempfängers (3) angibt, wobei die Vorrichtung (1) so ausgelegt ist, dass sie das Verfahren nach einem der vorhergehenden Ansprüche ausführt, wobei der Ultraschallwandler (2) und der Ultraschallempfänger (3) über ein lineares Verbindungselement (5) verbunden sind, **dadurch gekennzeichnet, dass** die Länge des Verbindungselements (5) verstellbar ist.

8. Vorrichtung nach Anspruch 7, bei der die Steuereinheit (4) so ausgelegt ist, dass sie die Information aus der Amplitude und/ oder der Laufzeit des empfangenen Ultraschallsignals (15) bestimmt.

9. Vorrichtung nach Anspruch 7 oder 8, bei der der Ultraschallwandler (2) und/ oder der Ultraschallempfänger (3) lösbar mit dem Verbindungselement (5) verbunden sind.

10. Vorrichtung nach einem der Ansprüche 7 bis 9, bei der die Steuereinheit (4) mindestens eine Benutzerschnittstelle umfasst, die so ausgelegt ist, dass sie die entsprechende Information als Audio- und/ oder visuelle Information ausgibt.

11. Vorrichtung nach einem der Ansprüche 7 bis 10, bei der der Ultraschallwandler (2) so ausgelegt ist, dass er Ultraschallsignale mit einer Frequenz von 100 kHz aussendet.

## Revendications

1. Un procédé de détermination de l'orientation des fibres dans une pale de rotor d'une turbine éolienne possédant un nombre de fibres réparties dans un matériau stratifié, grâce à quoi les fibres sont orientées dans au moins une direction définie, le procédé comprenant les étapes suivantes :
a) l'émission d'un signal ultrasonique dans le composant au moyen d'un transducteur ultrasonique,
b) la réception d'un signal ultrasonique réfléchi au moyen d'un récepteur ultrasonique et la génération d'un signal de mesure, grâce à quoi le transducteur ultrasonique et le récepteur ultrasonique sont disposés dans une relation linéaire définie,
c) la détermination d'une information indiquant un degré de l'orientation des fibres en relation avec la relation linéaire définie du transducteur ultrasonique et du récepteur ultrasonique à partir du signal de mesure respectif.

2. Le procédé selon la revendication 1, dans lequel les étapes a) et b) sont répétées au moins une fois pendant le déplacement du transducteur ultrasonique et/ou du récepteur ultrasonique le long du composant renforcé par des fibres, grâce à quoi l'information respective est déterminée à partir de signaux de mesure respectifs distincts ou à partir de tous les signaux de mesure respectifs.

3. Le procédé selon la revendication 1 ou 2, dans lequel l'information est déterminée à partir de l'amplitude et/ou du temps de parcours du signal ultrasonique reçu.

4. Le procédé selon l'une quelconque des revendications précédentes, dans lequel le signal ultrasonique émis possède une fréquence de 100 kHz.

5. Le procédé selon l'une quelconque des revendications précédentes, dans lequel l'information est libérée sous la forme d'une information audio et/ou ou visuelle.

6. Le procédé selon l'une quelconque des revendications précédentes, dans lequel un gel conducteur d'ultrasons est appliqué à la surface du composant respectif au moins dans la zone du transducteur ultrasonique et du récepteur ultrasonique.

7. Un appareil (1) de détermination de l'orientation des fibres dans une pale de rotor d'une turbine éolienne possédant un nombre de fibres (13) réparties dans un matériau stratifié (12), grâce à quoi les fibres (13) sont orientées dans au moins une direction définie, l'appareil (1) comprenant au moins un transducteur ultrasonique (2) adapté de façon à émettre un signal ultrasonique (15) et au moins un récepteur ultrasonique (3) adapté de façon à recevoir un signal ultrasonique (15), le transducteur ultrasonique (2) et le récepteur ultrasonique (3) étant disposés dans une relation linéaire définie, et une unité de commande (4) adaptée de façon à générer au moins un signal de mesure à partir du signal ultrasonique reçu (15) et de façon à déterminer une information indiquant un degré de l'orientation des fibres en relation avec la relation géométrique linéaire du transducteur ultrasonique (2) et du récepteur ultrasonique (3) à partir du au moins un signal de mesure, l'appareil (1) étant adapté de façon à exécuter le procédé selon l'une quelconque des revendications précédentes, grâce à quoi le transducteur ultrasonique (2) et le récepteur ultrasonique (3) sont raccordés par un élément de raccordement linéaire (5), **caractérisé en ce que** la longueur de l'élément de raccordement (5) est ajustable.

8. L'appareil selon la revendication 7, dans lequel l'unité de commande (4) est adaptée de façon à déterminer l'information à partir de l'amplitude et/ou du temps de parcours du signal ultrasonique reçu (15).

9. L'appareil selon la revendication 7 ou 8, dans lequel le transducteur ultrasonique (2) et/ou le récepteur ultrasonique (3) sont raccordés de manière amovible à l'élément de raccordement (5).

10. L'appareil selon l'une quelconque des revendications 7 à 9, dans lequel l'unité de commande (4) comprend au moins une interface utilisateur adaptée de façon à produire en sortie l'information respective sous la forme d'une information audio et/ou visuelle.

11. L'appareil selon l'une quelconque des revendications 7 à 10, dans lequel le transducteur ultrasonique (2) est adapté de façon à émettre des signaux ultrasoniques possédant une fréquence de 100 kHz.
